# EUROPÄISCHE PATENTSCHRIFT

(11) **EP 2 102 528 B1**
(45) Veröffentlichungstag und Bekanntmachung des Hinweises auf die Patenterteilung: **24.10.2012**
(21) Anmeldenummer: 07856657.7
(22) Anmeldetag: 12.12.2007
(51) Int. Cl.: F16H 61/40, F16H 61/44, B60K 17/10, B60K 17/356

(54) **HYDROSTATISCHER MEHRMOTORENANTRIEB**
HYDROSTATIC MULTI-MOTOR DRIVE
ENTRAÎNEMENT HYDROSTATIQUE À PLUSIEURS MOTEURS

(30) Priorität: 13.12.2006 DE 102006058802
(43) Veröffentlichungstag der Anmeldung: 23.09.2009
(73) Patentinhaber: Robert Bosch GmbH, 70442 Stuttgart (DE)
(72) Erfinder: LÖWE, Peter, 88483 Rott (DE); ESSIG, Heinz-Gerhard, 89173 Lonsee (DE)
(74) Vertreter: Beder, Jens
(86) Internationale Anmeldenummer: PCT/EP2007/010911
(87) Internationale Veröffentlichungsnummer: WO 2008/071420

(56) Entgegenhaltungen:
- EP-A- 1 125 782
- EP-A- 1 837 226
- GB-A- 1 019 593
- US-B1- 6 508 328

## Beschreibung

Die Erfindung betrifft einen hydrostatischen Mehrmotorenantrieb.

Aus der FR 2 709 454 A ist ein hydrostatischer Mehrmotorenantrieb bekannt. Der hydrostatische Mehrmotorenantrieb umfasst insgesamt vier verstellbare Hydromotoren. Zum Beaufschlagen der Hydromotoren mit Druckmittel ist eine mit einer Antriebsmaschine verbundene Hydropumpe vorgesehen. In Abhängigkeit von der Fahrtrichtung fördert die ebenfalls verstellbare Hydropumpe in eine erste oder eine zweite Arbeitsleitung. Um die Hydromotoren paarweise miteinander zu synchronisieren, sind die Hydromotoren paarweise seriell miteinander verbunden. Ein erstes Hydromotorenpaar ist über einen ersten Arbeitsleitungsabschnitt miteinander verbunden. Ebenso ist das zweite Hydromotorenpaar über einen zweiten Arbeitsleitungsabschnitt miteinander verbunden. Beim Durchströmen jeweils beider Hydromotoren eines Hydromotorpaars werden die beiden Hydromotoren des Hydromotorpaars zueinander synchronisiert, da ein konstanter Volumenstrom beide Hydromotoren durchströmt.

Um während eines normalen Fahrbetriebs, bei dem beispielsweise lediglich ein Hydromotor eines jeden Hydromotorpaars angetrieben werden soll, den Wirkungsgrad zu verbessern, existiert eine Umgehungsleitung, mit der der jeweils stromabwärtige Hydromotor eines jeden Hydromotorpaars umgangen wird. Das Druckmittel, welches durch den jeweils stromaufwärtigen Hydromotor strömt, wird damit an dem stromabwärtigen Hydromotor vorbeigeführt, wodurch der Gegendruck für den stromaufwärtigen Hydromotor sinkt. Damit erhöht sich der Wirkungsgrad der stromaufwärtigen Hydromotoren. Um zwischen einem gesperrten Betriebszustand und dem wirkungsgradoptimierten Zustand umschalten zu können, ist eine Ventileinheit vorgesehen, welche die Umgehungsleitung unterbrechen kann.

Bei dem aus der FR 2 709 454 A bekannten Mehrmotorenantrieb ist es nachteilig, dass durch das einfache Kurzschließen der beiden Anschlüsse des stromabwärtigen Hydromtors eines jeden Hydromotorpaars der eingangsseitige Druck des stromabwärtigen Hydromotors praktisch auf den Saugdruck der Hydropumpe abfällt. Der jeweils stromabwärtige Hydromotor eines jeden Hydromotorpaars muss daher durch den Antriebsstrang des Fahrzeugs mitgeschleppt werden, wodurch wiederum Verluste entstehen. Diese Verluste wirken sich nachteilig auf den Gesamtwirkungsgrad des Mehrmotorenantriebs aus.

Die nachveröffentlichte europäische Patentanmeldung EP 1 837 226 A2 offenbart einen hydrostatischen Mehrmotorenantrieb mit in Serie geschalteten Motoren.

Es ist daher die Aufgabe, einen hydrostatischen Mehrmotorenantrieb mit einem verbesserten Wirkungsgrad zu schaffen.

Die Aufgabe wird durch den erfindungsgemäßen Mehrmotorenantrieb mit den Merkmalen des Anspruchs 1 gelöst.

Erfindungsgemäß weist der hydrostatische Mehrmotorenantrieb eine Hydropumpe und zumindest ein erstes Hydromotorenpaar auf. Die beiden Hydromotoren des ersten Hydromotorpaars sind über einen ersten Arbeitsleitungsabschnitt seriell miteinander verbunden. Es ist eine erste Umgehungsleitung vorgesehen, die einen stromaufwärtigen Anschluss des stromabwärtigen Hydromotors mit einem stromabwärtigen Anschluss des stromabwärtigen Hydromotors verbindet. In der ersten Umgehungsleitung ist eine die erste Umgehungsleitung unterbrechende erste Ventileinheit angeordnet. Erfindungsgemäß ist in der ersten Umgehungsleitung zumindest eine erste Mindestdruckhalteeinrichtung zum Aufrechterhalten eines Mindestdrucks an dem stromaufwärtigen Anschluss des stromabwärtigen Hydromotors vorgesehen. Die Mindestdruckhalteeinrichtung ist dabei eingerichtet, Druckmittel zu dem stromabwärtigen Anschluss des stromabwärtigen Hydromotors über die Umgehungsleitung zuzuführen und den Mindestdruck an dem stromaufwärtigen Anschluss des stromabwärtigen Hydromotors aufrechtzuerhalten, der zum Erzeugen eines Antriebsmoments des stromabwärtigen Hydromotors führt. Damit wird sichergestellt, dass an dem stromaufwärtigen Anschluss des stromabwärtigen Hydromotors ein nicht verschwindender Druck anliegt. Dabei ist durch die Mindestdruckhalteeinrichtung der dort herrschende Druck einstellbar. Somit kann ein niedriger Druck in dem ersten Arbeitsleitungsabschnitt eingestellt werden, der nicht zu einer signifikanten Verschlechterung des Wirkungsgrads des stromaufwärtigen Motors führt. Gleichzeitig wird jedoch an der Eingangsseite des stromabwärtigen Hydromotors ein Druck aufrechterhalten, der zum Erzeugen eines geringen Antriebsmoments des stromabwärtigen Hydromotors führt. Damit wird der stromabwärtige Hydromotor ebenfalls angetrieben und muss nicht durch das Fahrzeug mitgeschleppt werden. Dementsprechend wird nicht nur durch das Entspannen des ersten Arbeitsleitungsabschnitts über die Umgehungsleitung der Wirkungsgrad des stromaufwärtigen Hydromotors durch Reduzieren des Gegendrucks verringert, sondern es werden überdies auch Verluste an dem stromabwärtigen Hydromotor vermieden.

Weiterhin umfasst die Umgehungsleitung zumindest einen ersten Abschnitt, einen zweiten Abschnitt und einen dritten Abschnitt. Der erste Abschnitt verbindet den ersten Arbeitsleitungsabschnitt und somit beide Hydromotoren an ihren einander zugewandten Anschlüssen mit der ersten Ventileinheit. Der zweite Abschnitt verbindet die erste Ventileinheit mit einer stromabwärtigen Arbeitsleitung und der erste Abschnitt verbindet die Ventileinheit mit der stromaufwärtigen Arbeitsleitung. Damit wird eine Symmetrie des hydrostatischen Mehrmotorenantriebs erreicht, durch die der hydrostatische Mehrmotorenantrieb in gleicher Weise für beide Strömungsrichtungen eingesetzt werden kann. Auch bei einer Umkehr der Strömungsrichtung durch die beiden Hydromotoren des ersten Hydromotorpaars ist daher eine Umgehung des dann stromabwärtigen Hydromotors möglich. In dem zweiten Abschnitt und in dem dritten Abschnitt ist jeweils ein federbelastetes Rückschlagventil angeordnet.

In den Unteransprüchen sind vorteilhafte Weiterbildungen des erfindungsgemäßen hydrostatischen Mehrmotorenantriebs ausgeführt.

Insbesondere ist es vorteilhaft, zumindest ein federbelastetes Rückschlagventil in der Mindestdruckhalteeinrichtung vorzusehen. Mit Hilfe eines solchen federbelasteten Rückschlagventils ist es in einfacher Weise möglich, einen durch die Federkraft definierten Mindestdruck in dem ersten Arbeitsleitungsabschnitt aufrechtzuerhalten.

Insbesondere ist es bevorzugt, dass der hydrostatische Mehrmotorenantrieb ein zweites Hydromotorenpaar umfasst. Die beiden Hydromotoren des zweiten Hydromotorenpaars sind über einen zweiten Arbeitsleitungsabschnitt ebenfalls seriell miteinander verbunden. Zur Umgehung des stromabwärtigen Hydromotors des zweiten Hydromotorpaars ist eine zweite Umgehungsleitung vorgesehen, die durch eine zweite Ventileinheit ebenfalls trennbar ist. Ferner ist in der zweiten Umgehungsleitung zumindest eine zweite Mindestdruckhalteeinrichtung zugeordnet. Mit einem solchen Mehrmotorenantrieb, der über zwei Hydromotorenpaare verfügt, kann in einfacher Weise ein allradgetriebener Fahrantrieb realisiert werden.

Die erste und die zweite Umgehungsleitung sowie die entsprechenden Mindesthaltedruckeinrichtungen und die Ventileinheit sind dabei vorzugsweise gleich aufgebaut. Durch das Zuordnen von jeweils einer Ventileinheit und jeweils einer Umgehungsleitung und einer darin angeordneten Mindestdruckhalteeinrichtung zu jedem Hydromotorenpaar ist eine einfache Leitungsführung gewährleistet.

Gemäß einer weiteren bevorzugten Ausführungsform umfasst der hydrostatische Antrieb ein zweites Hydromotorpaar, dessen zwei Hydromotoren über einen zweiten Arbeitsleitungsabschnitt seriell miteinander verbunden sind. Die jeweils stromabwärtigen Hydromotoren der beiden Hydromotorpaare bedienen sich dabei einer gemeinsamen ersten Umgehungsleitung, so dass lediglich eine Ventileinheit zum Unterbrechen der ersten Umgehungsleitung erforderlich ist. Die erste Umgehungsleitung verbindet die jeweils stromaufwärtigen Anschlüsse der stromabwärtigen Hydromotoren beider Hydromotorenpaare mit den stromabwärtigen Anschlüssen der stromabwärtigen Hydromotoren beider Hydromotorenpaare.

Dabei wird es insbesondere bevorzugt, einen ersten Abschnitt der ersten Umgehungsleitung in einen ersten Umgehungsleitungszweig in einen zweiten Umgehungsleitungszweig aufzuteilen. Der erste Umgehungsleitungszweig verbindet den ersten Arbeitsleitungsabschnitt mit der Ventileinheit. Der zweite Umgehungsleitungszweig verbindet dagegen den zweiten Arbeitsleitungsabschnitt mit der ersten Ventileinheit. Insbesondere kann der erste Umgehungsleitungszweig und der zweite Umgehungsleitungszweig an einem gemeinsamen Anschluss der ersten Ventileinheit ausmünden.

Gemäß einer weiteren bevorzugten Ausführungsform münden dagegen der erste Umgehungsleitungszweig und der zweite Umgehungsleitungszweig an zwei unterschiedlichen Anschlüssen der Ventileinheit aus. Diese beiden Anschlüsse der ersten Ventileinheit sind in einer Schaltposition der ersten Ventileinheit voneinander getrennt. Damit existiert während eines synchronisierten Fahrbetriebs keine durchströmbare Verbindung von dem ersten Arbeitsleitungsabschnitt zu dem zweiten Arbeitsleitungsabschnitt. Die beiden Hydromotoren des ersten Hydromotorpaars und die beiden Hydromotoren des zweiten Hydromotorpaars sind dann somit paarweise miteinander synchronisiert, jedoch unabhängig von den Hydromotoren des jeweils anderen Hydromotorpaars.

Der erste Arbeitsleitungsabschnitt und der zweite Arbeitsleitungsabschnitt verfügen vorzugsweise jeweils über eine separate Speiseventileinheit, über die die Arbeitsleitungsabschnitte mit einer Speiseeinrichtung verbunden sind.

Die Mindestdruckhalteeinrichtung umfasst vorzugsweise auch bei der Verwendung von zwei Hydromotorpaaren jeweils ein federbelastetes Rückschlagventil in dem zweiten Abschnitt und in dem dritten Abschnitt der Umgehungsleitung. Damit wird auch bei der Verwendung von insgesamt vier Hydromotoren fahrtrichtungsunabhängig die Möglichkeit geschaffen, jeweils nur einen Hydromotor eines Hydromotorenpaars mit einem großen Antriebsmoment zu betreiben und durch das Antreiben des zweiten Hydromotors eines jeden Hydromotorpaars mit einem geringen Moment die Gesamtverluste des hydrostatischen Mehrmotorenantriebs zu verringern.

Die Ventileinheit in der ersten und/oder in der zweiten Umgehungsleitung ist vorzugsweise als Schaltventil ausgeführt, wobei zumindest in einer Schaltposition des Schaltventils der die beiden Hydromotoren miteinander verbindende Arbeitsleitungsabschnitt mit einer Speiseeinrichtung verbunden ist.

Bevorzugte Ausführungsbeispiele des erfindungsgemäßen hydrostatischen Mehrmotorenantriebs sind in der Zeichnung dargestellt und werden in der nachfolgenden Beschreibung näher erläutert. Es zeigen:
- Fig. 1: ein erstes Ausführungsbeispiel eines erfindungsgemäßen hydrostatischen Mehrmotorenantriebs mit einem Hydromotorpaar;
- Fig. 2: ein zweites Ausführungsbeispiel eines erfindungsgemäßen hydrostatischen Mehrmotorenantriebs mit zwei Hydromotorpaaren;
- Fig. 3: ein drittes Ausführungsbeispiel eines erfindungsgemäßen hydrostatischen Mehrmotorenantriebs mit zwei Hydromotorpaaren;
- Fig. 4: ein viertes Ausführungsbeispiel eines erfindungsgemäßen hydrostatischen Mehrmotorenantriebs zwei Hydromotorpaaren;
- Fig. 5: ein fünftes Ausführungsbeispiel eines erfindungsgemäßen hydrostatischen Mehrmotorenantriebs mit einem vereinfachten Aufbau; und
- Fig. 6: ein weiteres Ausführungsbeispiel des vereinfachten Mehrmotorenantriebs.

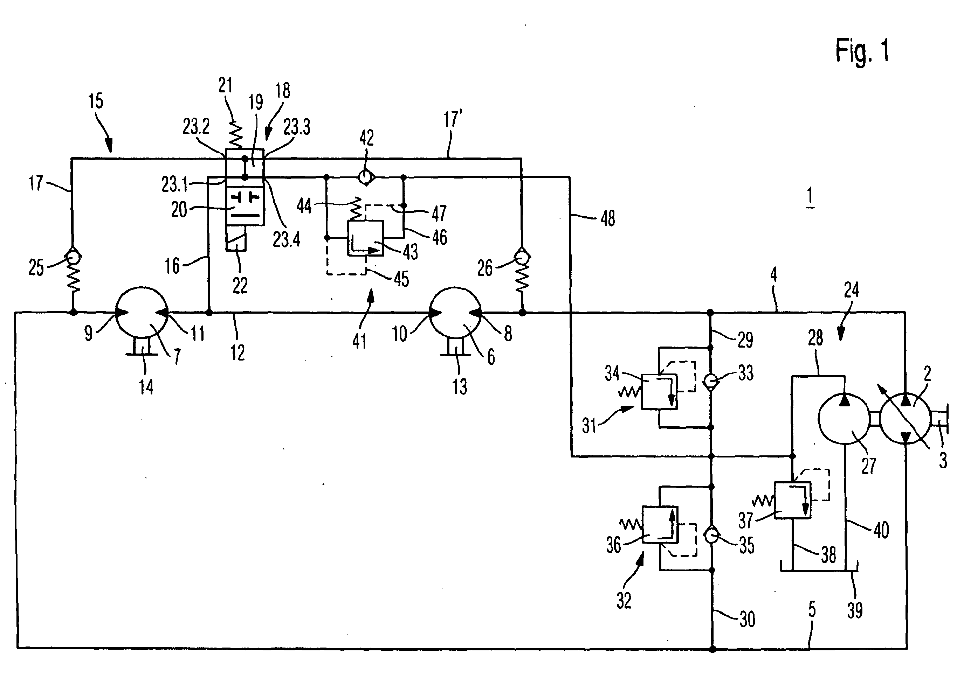

In der Fig. 1 ist ein hydraulischer Schaltplan eines erfindungsgemäßen hydrostatischen Mehrmotorenantriebs 1 dargestellt. Der hydrostatische Mehrmotorenantrieb 1 umfasst eine verstellbare Hydropumpe 2. Die verstellbare Hydropumpe 2 wird über eine Triebwelle 3 durch einen nicht dargestellten Antriebsmotor angetrieben. In der Regel ist der nicht dargestellte Antriebsmotor als Brennkraftmaschine ausgeführt.

Entsprechend dem eingestellten Fördervolumen und der Förderrichtung fördert die Hydropumpe 2 z. B. eine Axialkolbenmaschine in Schrägscheibenbauart in eine erste Arbeitsleitung 4 oder in eine zweite Arbeitsleitung 5. Der dargestellte hydrostatische Antrieb 1 ist vorzugsweise ein Fahrantrieb für ein hydrostatisch angetriebenes Nutzfahrzeug. Der hydrostatische Mehrmotorenantrieb umfasst einen ersten Hydromotor 6 und einen zweiten Hydromotor 7. Der erste Hydromotor 6 ist mit einem ersten Anschluss 8 mit der ersten Arbeitsleitung 4 verbunden. Der zweite Hydromotor 7 ist mit einem ersten Anschluss 9 des zweiten Hydromotors 7 mit der zweiten Arbeitsleitung 5 verbunden. Die beiden Hydromotoren 6, 7 weisen jeweils einen zweiten Anschluss 10, 11 auf, wobei diese beiden zweiten Anschlüsse 10, 11 des ersten Hydromotors 6 und des zweiten Hydromotors 7 miteinander über einen ersten Arbeitsleitungsabschnitt 12 verbunden sind.

In dem dargestellten Ausführungsbeispiel sind die beiden Hydromotoren 6, 7, die ein erstes Hydromotorpaar bilden, als Konstantmotoren ausgeführt. Durch die serielle Anordnung, bei der der erste Hydromotor 6 mit dem zweiten Hydromotor 7 über den ersten Arbeitsleitungsabschnitt 12 verbunden ist, wird ein synchroner Lauf der beiden Hydromotoren 6, 7 erreicht. Die Synchronisation der beiden Hydromotoren 6, 7 wird durch die Volumenstromidentität in dem ersten Hydromotor 6 und in dem zweiten Hydromotor 7 erreicht.

Das durch die beiden Hydromotoren 6, 7 erzeugte Drehmoment wird beispielsweise an eine angetriebene Fahrzeugachse über die Abtriebswelle 13 des ersten Hydromotors 6 oder über die Abtriebswelle 14 des zweiten Hydromotors 7 abgeführt.

Für die nachfolgenden Ausführungen sei angenommen, dass die Hydropumpe 2 in ihrem Fördervolumen bzw. ihrer Förderrichtung so eingestellt ist, dass sie in die erste Arbeitsleitung 4 fördert. Demnach wird der erste Hydromotor 6 des ersten Hydromotorpaars zum stromaufwärtigen Hydromotor. Entsprechend ist der zweite Hydromotor 7 des ersten Hydromotorpaars der stromabwärtige Hydromotor in Bezug auf die Strömungsrichtung, wie sie durch die Förderrichtung der Hydropumpe 2 vorgegeben ist. Es ist offensichtlich, dass bei der Umkehr der Strömungsrichtung (z. B. bei Rückwärtsfahrt) die Bezeichnungen "stromaufwärts" und "stromabwärts" in Bezug auf die Anschlüsse und Hydromotoren getauscht werden müssen.

Der synchrone Lauf der beiden Hydromotoren 6, 7 wird erreicht, wenn die beiden Hydromotoren 6, 7 seriell zueinander angeordnet sind und das durch die Hydropumpe 2 geförderte Druckmittel beide Hydromotoren 6, 7 durchströmt. Dies kann beispielsweise zu einem gesperrten Allradantrieb eingesetzt werden. Um die bei dem stromaufwärtigen ersten Hydromotor 6 entstehenden Verluste gering zu halten, ist es jedoch wünschenswert, den Gegendruck zu verringern. Der Gegendruck ist derjenige Druck, der auf der stromabwärtigen Seite des ersten, stromaufwärtigen Hydromotors 6 herrscht. Daher muss der in dem ersten Arbeitsleitungsabschnitt 12 herrschende Druck zur Verringerung der Verluste möglichst gering gehalten werden. Hierzu ist eine erste Umgehungsleitung 15 vorgesehen. Die erste Umgehungsleitung 15 umfasst einen ersten Abschnitt 16, einen zweiten Abschnitt 17 sowie einen dritten Abschnitt 17'. Der erste Abschnitt 16 ist an einem ersten Ende mit dem ersten Arbeitsleitungsabschnitt 12 verbunden. Der zweite Abschnitt 17 ist mit der zweiten Arbeitsleitung 5 und damit für die vorbeschriebene Strömungsrichtung mit dem stromabwärtigen ersten Anschluss 9 des zweiten Hydromotors 7 verbunden. Der dritte Abschnitt 17' ist mit einem ersten Ende mit der ersten Arbeitsleitung 4 und damit mit dem stromaufwärtigen ersten Anschluss 8 des ersten Hydromotors 6 verbunden. In der ersten Umgehungsleitung 15 ist eine erste Ventileinheit vorgesehen, mit der die Verbindung zwischen dem ersten Abschnitt 16 und dem zweiten und dritten Abschnitt 17, 17' unterbrochen werden kann. Die erste Ventileinheit ist als erstes Schaltventil 18 ausgeführt. Das erste Schaltventil 18 ist ein 4/2-Wegeventil. Das erste Schaltventil 18 verbindet in seiner Ruheposition 19, die die erste Schaltposition des ersten Schaltventils 18 darstellt, den ersten Abschnitt 16 sowohl mit dem zweiten Abschnitt 17 als auch mit dem dritten Abschnitt 17'. In einer zweiten Schaltposition 20 ist dagegen die Verbindung zwischen dem ersten Abschnitt 16 und dem zweiten und dritten Abschnitt 17, 17' unterbrochen. Aus seiner Ruheposition, in der das erste Schaltventil 18 durch die Kraft einer Ventilfeder 21 gehalten wird, ist das erste Schaltventil 18 in seine zweite Schaltposition 20 bringbar, indem ein der Kraft der Feder 21 entgegengesetzt wirkender Elektromagnet 22 mit einem Steuersignal beaufschlagt wird. Anstelle des in der Fig. 1 dargestellten Elektromagneten 22 sind auch andere Aktuatoren einsetzbar. Insbesondere kann beispielsweise eine Steuerdruckfläche mit einer hydraulischen Kraft beaufschlagt werden.

Das erste Schaltventil 18 weist einen ersten Anschluss 23.1, einen zweiten Anschluss 23.2, einen dritten Anschluss 23.3 und einen vierten Anschluss 23.4 auf. Der erste Anschluss 23.1 ist mit dem ersten Abschnitt 16 verbunden. Der zweite Abschnitt 23.2 ist mit dem zweiten Abschnitt 17 verbunden. Der dritte Anschluss 23.3 ist mit dem dritten Abschnitt 17' verbunden. Der vierte Anschluss 23.4 ist mit einer Verbindungsleitung 48 verbunden und in der Ruheposition 19 des ersten Schaltventils 18 mit den anderen Anschlüssen 23.1, 23.2 und 23.3 verbunden. Das von dem vierten Anschluss 23.4 abgewandte Ende der Verbindungsleitung 48 ist mit einer Speiseeinrichtung 24 verbunden. Die Speiseeinrichtung 24 wird nachfolgend noch erläutert.

In dem zweiten Abschnitt 17 ist ein erstes federbelastetes Rückschlagventil 25 angeordnet. Das federbelastete erste Rücksuhlagventil 25 öffnet in Richtung auf die zweite Arbeitsleitung 5 hin.

In entsprechender Weise ist in dem dritten Abschnitt 17' ein zweites federbelastetes Rückschlagventil 26 angeordnet. Das zweite federbelastete Rückschlagventil 26 öffnet in Richtung auf die erste Arbeitsleitung 4 hin.

Befindet sich das erste Schaltventil 18 in der in der Fig. 1 dargestellten Ruheposition 19, so ist der erste Abschnitt 16 sowohl mit dem dritten Abschnitt 17' als auch mit dem zweiten Abschnitt 17 und mit der Speiseeinrichtung 24 verbunden. Bei einem Fördern von Druckmittel durch die hydrostatische Pumpe 2 in die erste Arbeitsleitung 4 durchströmt das Druckmittel zunächst den ersten Hydromotor 6. Das zweite federbelastete Rückschlagventil 26 ist aufgrund der sich einstellenden Druckdifferenz zwischen der stromaufwärtigen Seite des ersten Hydromotors 6 und der stromabwärtigen Seite des ersten Hydromotors 6 in seiner geschlossenen Position. Das dem ersten Hydromotor 6 zugeführte Druckmittel wird über den ersten Hydromotor 6 unter Erzeugung von Drehmoment an der Abtriebswelle 13 in den ersten Arbeitsleitungsabschnitt 12 entspannt. Über den ersten Abschnitt 16 und den zweiten Abschnitt 17, die in der Ruheposition des Schaltventils 18 miteinander verbunden sind, wird unter Umgehung des zweiten, stromabwärtigen Hydromotors 7, das Druckmittel der zweiten, stromabwärtigen Arbeitsleitung 5 zugeführt. Das erste federbelastete Rückschlagventil 25 öffnet bei dieser Strömungsrichtung und gibt eine durchströmbare Verbindung zwischen dem zweiten Abschnitt 17 und der zweiten Arbeitsleitung 5 frei. Durch die Federkraft der Feder des ersten federbelasteten Rückschlagventils 25 kann dabei eingestellt werden, ab welchem Druck in dem ersten Arbeitsleitungsabschnitt 12 das federbelastete Rückschlagventil 25 öffnet. Vorzugsweise wird das erste federbelastete Rückschlagventil 25 auf einen Öffnungsdruck von 10 bar eingestellt. Damit liegt an dem stromaufwärtigen zweiten Anschluss 11 des zweiten, stromabwärtigen Hydromotors 7 ein durch das erste federbelastete Rückschlagventil 25 definierter Druck an. Der zweite, stromabwärtige Hydromotor 7 des ersten Hydromotorpaars erfährt somit eine geringe Antriebsleistung und muss nicht über die Triebwelle 14 durch das angetriebene Fahrzeug mitgeschleppt werden. Infolgedessen wird nicht nur durch Absenken des in dem ersten Arbeitsleitungsabschnitt 12 herrschenden Drucks der Wirkungsgrad des stromaufwärtigen ersten Hydromotors 6 vergrößert, sondern auch zusätzliche Verluste durch den stromabwärtigen zweiten Hydromotor 7 werden verhindert. Die erste Umgehungsleitung 15 verbindet für die vorbeschriebene Strömungsrichtung also den stromaufwärtigen zweiten Anschluss 11 des zweiten, stromabwärtigen Hydromotors 7 mit dem stromabwärtigen ersten Anschluss 9 des zweiten, stromabwärtigen Hydromotors 7.

Durch den dritten Abschnitt 17' ist das Erzeugen eines Hauptantriebsmoments durch lediglich den stromaufwärtigen Hydromotor auch bei einer Umkehrung der Fahrtrichtung und damit der Strömungsrichtung möglich. In diesem Fall wird durch die Hydropumpe 2 Druckmittel in die zweite, dann stromaufwärtige Arbeitsleitung 5 gefördert. Das erste federbelastete Rückschlagventil 25 geht daraufhin in seine geschlossene Position und der Förderdruck der Hydropumpe 2 liegt an dem dann stromaufwärtigen ersten Anschluss 9 der zweiten, dann stromaufwärtigen Hydropumpe 7 an. Unter Erzeugung eines Abtriebsdrehmoments wird das Druckmittel über den stromaufwärtigen, zweiten Hydromotor 7 in den ersten Arbeitsleitungsabschnitt 12 entspannt. Befindet sich das erste Schaltventil 18 in der in der Fig. 1 dargestellten Position, so stellt sich aufgrund des zweiten federbelasteten Rückschlagentils 26 in dem ersten Arbeitsleitungsabschnitt 12 wiederum ein Druck von 10 bar ein, sofern das zweite federbelastete Rückschlagventil 26 ebenfalls bei 10 bar in seine geöffnete Position geht. Das Druckmittel wird über den ersten Abschnitt 16 und den dritten Abschnitt 17' der ersten Umgehungsleitung 15 in die erste, dann stromabwärtige Arbeitsleitung 4 abgeführt. Der dann stromaufwärtige zweite Anschluss 10 des stromabwärtigen, ersten Hydromotors 6 wird daher lediglich mit dem niedrigen Druck von 10 bar beaufschlagt. Auch für die entgegengesetzte Fahrtrichtung wird daher eine Verbesserung des Gesamtwirkungsgrads des hydrostatischen Mehrmotorenantriebs erreicht.

Anstelle der federbelasteten Rückschlagventile 26, 25 als Mindestdruckhalteeinrichtung könnte beispielsweise auch ein Rückschlagventil in Kombination mit einer Drosselstelle eingesetzt werden.

Der vierte Anschluss 23.4 des Schaltventils 18 ist, wie es bereits erläutert wurde, über die Verbindungsleitung 48 mit der Speiseeinrichtung 24 des Mehrmotorenantriebs 1 verbunden. Die Speiseeinrichtung 24 umfasst eine als Konstantpumpe ausgeführte Speisepumpe 27. Die Speisepumpe 27 fördert in eine Speisedruckleitung 28 Druckmittel. Die Speisepumpe 27 und die Hydropumpe 2 sind vorzugsweise durch denselben Antriebsmotor und über dieselbe Antriebswelle 3 angetrieben. Die Speisedruckleitung 28 ist über eine erste Speiseleitung 29 und über eine zweite Speiseleitung 30 mit der ersten Arbeitsleitung 4 bzw. der zweiten Arbeitsleitung 5 verbunden. In der ersten Speiseleitung 29 ist eine erste Speiseventileinheit 31 vorgesehen. Die erste Speiseventileinheit 31 umfasst ein in der ersten Speiseleitung 29 angeordnetes Rückschlagventil 33. Das Rückschlagventil 33 öffnet in Richtung auf die erste Arbeitsleitung 4 hin. Parallel zu dem Rückschlagventil 33 ist ein erstes Hochdruckbegrenzungsventil 34 vorgesehen.

Das erste Hochdruckbegrenzungsventil 34 ist parallel zu dem Rückschlagventil 33 angeordnet und entspannt die erste Arbeitsleitung 4 in Richtung auf die Speisedruckleitung 28 hin, wenn der Druck in der ersten Arbeitsleitung 4 einen kritischen Wert übersteigt.

In entsprechender Weise ist in der zweiten Speiseleitung 30 eine zweite Speiseventileinheit 32 vorgesehen. Die zweite Speiseventileinheit 32 umfasst ein zweites Rückschlagventil 35 und ein parallel dazu angeordnetes zweites Hochdruckbegrenzungsventil 36. Die Funktion der zweiten Speiseventileinheit 32 entspricht der Funktion der ersten Speiseventileinheit 31. Auf eine erneute Beschreibung wird zur Vermeidung von Wiederholungen verzichtet.

In der Verbindungsleitung 48 ist eine dritte Speiseventileinheit 41 angeordnet. Die dritte Speiseventileinheit 41 umfasst ein drittes Rückschlagventil 42. Das dritte Rückschlagventil 42 ist in der Verbindungsleitung 48 angeordnet und öffnet in Richtung auf das erste Schaltventil 18 hin. Parallel zu dem dritten Rückschlagventil 42 ist ein Differenzdruckregelventil 43 vorgesehen. Das Differenzdruckregelventil 43 wird durch eine Regelventilfeder 44 in einer geschlossenen Position gehalten. Entgegengesetzt zu der Kraft der Regelventilfeder 44 greift an einer Messfläche des Differenzdruckregelventils 43 eine hydraulische Kraft an. Die hydraulische Kraft wird aufgrund des an dem vierten Anschluss 23.4 des ersten Schaltventils 18 anliegenden Drucks erzeugt und über eine erste Messleitung 45 der Kraftmessfläche des Differenzdruckregelventils 43 zugeführt. Gleichsinnig mit der Kraft der Regelventilfeder 44 wirkt eine weitere hydraulische Kraft auf das Differenzdruckregelventil 43. Diese weitere hydraulische Kraft wird an einer weiteren hydraulischen Kraftmessfläche erzeugt, wobei der weiteren Kraftmessfläche der Druck in der Verbindungsleitung 48 stromaufwärts des dritten Rückschlagventils 42 zugeführt wird.

Das Differenzdruckregelventil 43 ist in einer Bypassleitung 46 angeordnet. Die Bypassleitung 46 verbindet einen Leitungsabschnitt der Verbindungsleitung 48 zwischen dem dritten Rückschlagventil 42 und dem Schaltventil 18 mit einem Leitungsabschnitt der Verbindungsleitung 48, der das dritte Rückschlagventil 42 mit der Speisedruckleitung 28 verbindet.

Zur Absicherung der Speiseeinrichtung 24 und zum Einstellen eines möglichst konstanten Speisedrucks, ist mit der Speisedruckleitung 28 ein Speisedruckbegrenzungsventil 37 verbunden. Das Speisedruckbegrenzungsventil 37 ist in einer Entspannungsleitung 38 angeordnet. Die Entspannungsleitung 38 mündet in ein Tankvolumen 39 aus. Mit Hilfe des Speisedruckbegrenzungsventils 37 wird ein von der Drehzahl der als Konstantpumpe ausgeführten Speisepumpe 7 weitgehend unabhängiger Druck in der Speisedruckleitung 28 aufrechterhalten. Die Speisepumpe 27 saugt über eine Saugleitung 40 Druckmittel aus dem Tankvolumen 39 an.

In der Fig. 1 sind der erste Hydromotor 6 und der zweite Hydromotor 7, die gemeinsam das erste Hydromotorpaar bilden, als Konstantmotoren ausgeführt. Die Konstantmotoren sind für eine Förderung von Druckmittel in zwei Richtungen vorgesehen. Alternativ können die beiden Hydromotoren des ersten Hydromotorpaars auch als Schaltmotoren oder Verstellmotoren ausgebildet sein.

Durch das Vorsehen der Mindestdruckhalteeinrichtung in Form von federbelasteten Rückschlagventilen wird auf der Eingangsseite des jeweils stromabwärtigen Hydromotors des Hydromotorpaars ein Mindestdruck aufrechterhalten. Gleichzeitig wird über die erste Umgehungsleitung 15 der Druck in dem ersten Arbeitsleitungsabschnitt 12 deutlich reduziert und die Verluste aufgrund des Gegendrucks bei dem stromaufwärtigen ersten oder zweiten Hydromotor 6, 7 werden verringert. Damit kann der Gesamtwirkungsgrad signifikant verbessert werden. Eine solche Einstellung ist immer dann vorteilhaft, wenn ein Fahrbetrieb lediglich durch eine angetriebene Fahrzeugachse sinnvoll ist, weil dies beispielsweise die Traktionsverhältnisse erlauben. Der Antrieb durch lediglich den stromaufwärtigen Hydromotor des Hydromotorpaars wird den größten Anteil an dem Gesamtfahrbetrieb ausmachen. Daher ist die Ruheposition 19 des ersten Schaltventils 18 so gewählt, dass der stromabwärtige Hydromotor 7 oder 6 des Hydromotorpaars lediglich mit einem geringen Restdruck beaufschlagt ist. Ein Bestromen des Elektromagneten 22 bzw. ein Beschalten des Aktuators, um das erste Schaltventil 18 in seine zweite Schaltposition 20 zu bringen, ist daher immer nur dann erforderlich, wenn ein gesperrter Antrieb und damit der Synchronlauf der beiden Hydromotoren 6, 7 erforderlich ist.

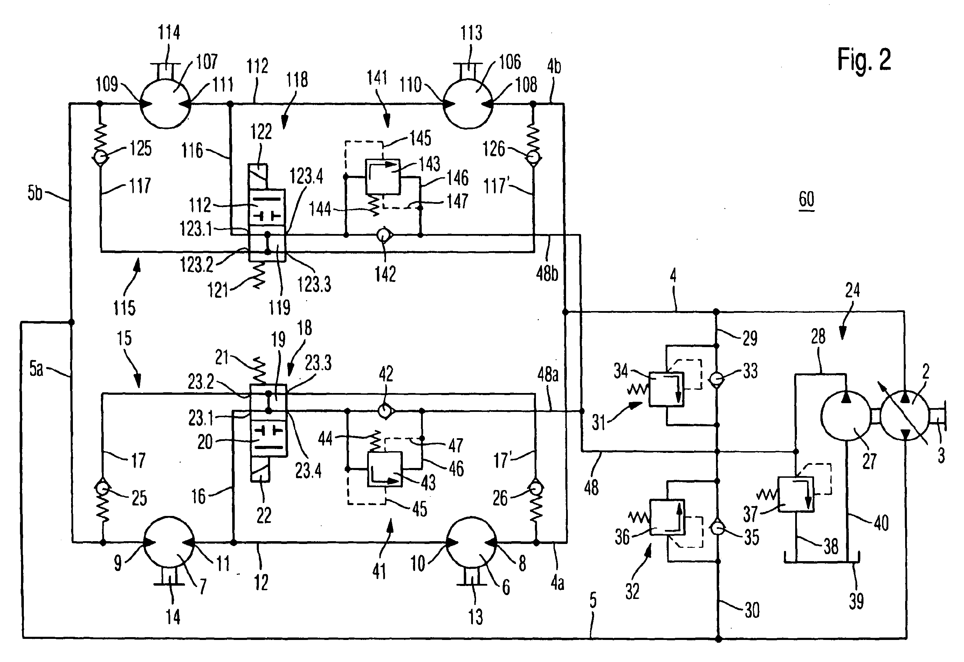

In der Fig. 2 ist ein weiteres bevorzugtes Ausführungsbeispiel eines erfindungsgemäßen hydrostatischen Mehrmotorenantriebs dargestellt. Zusätzlich zu dem ersten Hydromotor 6 und dem zweiten Hydromotor 7 des ersten Hydromotorpaars ist ein zweites Hydromotorpaar vorgesehen. Die in Bezug auf ein einzelnes Hydromotorpaar bereits erläuterten Elemente, die sich in gleicher Weise bei dem zweiten Hydromotorpaar wiederfinden, sind der Einfachheit halber mit um 100 erhöhten Bezugszeichen bezeichnet.

Das zweite Hydromotorpaar umfasst daher einen ersten Hydromotor 106 und einen zweiten Hydromotor 107. Der erste Hydromotor 106 weist einen ersten Anschluss 108 und einen zweiten Anschluss 110 auf. Der zweite Hydromotor 107 des zweiten Hydromotorpaars 107 weist einen ersten Anschluss 109 und einen zweiten Anschluss 111 auf. Die zweiten Anschlüsse 110 und 111 des ersten Hydromotors 106 und des zweiten Hydromotors des zweiten Hydromotorpaars sind über einen zweiten Arbeitsleitungsabschnitt 112 miteinapder verbunden. Das erste und das zweite Hydromotorpaar sind parallel mit der ersten Arbeitsleitung 4 und mit der zweiten Arbeitsleitung 5 verbunden. Die erste Arbeitsleitung 4 teilt sich hierzu in einen ersten Arbeitsleitungszweig 4a und einen zweiten Arbeitsleitungszweig 4b auf. Dementsprechend verzweigt sich auch die zweite Arbeitsleitung 5 in einen dritten Arbeitsleitungszweig 5a und einen vierten Arbeitsleitungszweig 5b.

Über den ersten Arbeitsleitungszweig 4a und den zweiten Arbeitsleitungszweig 4b sind die jeweils ersten Anschlüsse 8, 108 der ersten Hydromotoren 6, 106 des ersten bzw. zweiten Hydromotorpaars mit der ersten Arbeitsleitung 4 verbunden. Entsprechend sind über den dritten Arbeitsleitungszweig 5a und den vierten Arbeitsleitungszweig 5b die ersten Anschlüsse 9, 109 der zweiten Hydromotoren 7, 107 des ersten bzw. zweiten Hydromotorpaars mit der zweiten Arbeitsleitung 5 verbunden. Um eine eindeutige Zuordnung der zweiten und dritten Abschnitte 17, 17' der ersten Umgehungsleitung 15 zu dem ersten Hydromotorpaar zu ermöglichen, mündet der zweite Abschnitt 17 in den dritten Arbeitsleitungszweig 5a aus. Entsprechend mündet der dritte Abschnitt 17' in den zweiten Arbeitsleitungszweig 4a aus.

Das zweite Hydromotorpaar mit den Hydromotoren 106, 107 weist eine zweite Umgehungsleitung 115 auf, in der ein zweites Schaltventil 118 angeordnet ist. Die Funktion und die Beschaltung des zweiten Schaltventils 118 und der zweiten Umgehungsleitung 115 entsprechen der ersten Umgehungsleitung 15 und dem ersten Schaltventil 18, so dass auf eine wiederholende Beschreibung verzichtet wird. Der jeweils vierte Anschluss 23.4 bzw. 123.4 des ersten Schaltventils 18 und des zweiten Schaltventils 118 sind über einen ersten Verbindungsleitungszweig 48a bzw. einen zweiten Verbindungsleitungszweig 48b mit der Verbindungsleitung 48 und hierüber mit der Speiseeinrichtung 24 verbunden.

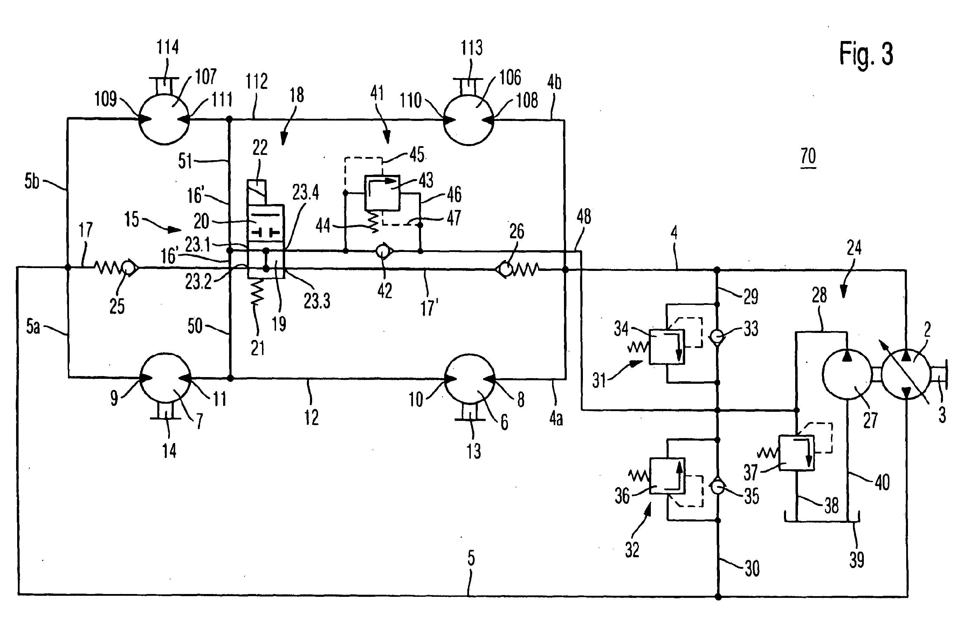

In der Fig. 3 ist ein weiteres bevorzugtes Ausführungsbeispiel mit zwei Hydromotorpaaren dargestellt. Im Gegensatz zu dem Ausführungsbeispiel der Fig. 2 wird jedoch nicht eine erste Umgehungsleitung 15 und eine zweite Umgehungsleitung 115 vorgesehen, die jeweils einem Hydromotorpaar zugeordnet ist. Vielmehr wird ein gemeinsames erstes Schaltventil 18 vorgesehen. Um auch eine Umgehung des stromabwärtigen Hydromotors des zweiten Hydromotorpaars zu ermöglichen, umfasst der erste Abschnitt 16' der Umgehungsleitung 15 einen ersten Umgehungsleitungszweig 50 und einen zweiten Umgehungsleitungszweig 51. Die beiden Umgehungsleitungszweige 50, 51 münden gemeinsam an dem ersten Anschluss 23.1 des ersten Schaltventils 18 aus.

Die in Bezug auf die vorangegangenen Ausführungsbeispiele bereits beschriebenen Elemente sind mit denselben Bezugszeichen bezeichnet. Auf ihre erneute Beschreibung wird daher verzichtet.

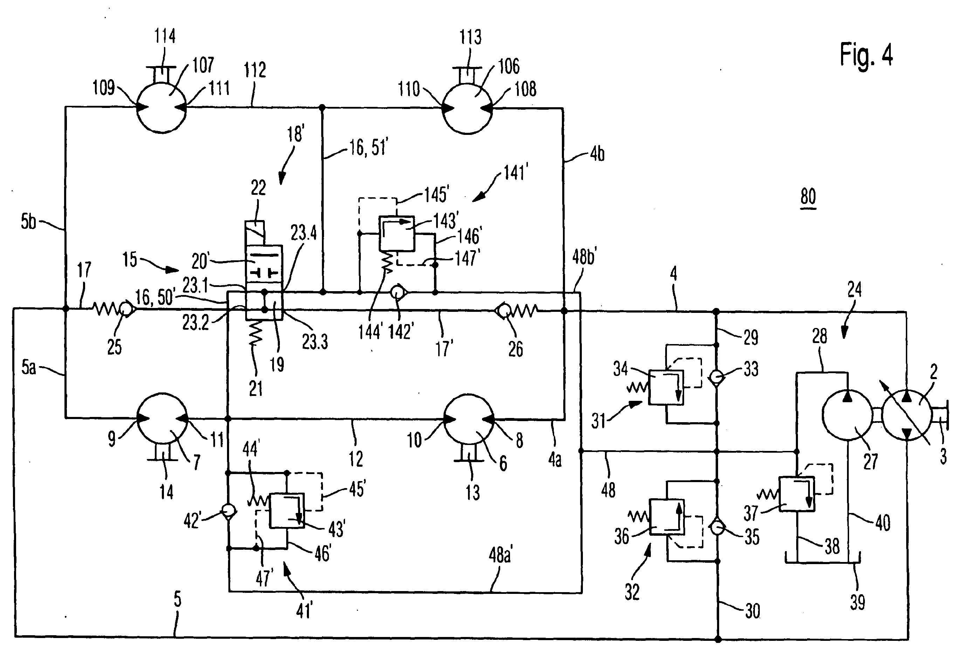

In der Fig. 4 ist ein viertes Ausführungsbeispiel eines erfindungsgemäßen hydrostatischen Mehrmotorenantriebs dargestellt. Das Ausführungsbeispiel der Fig. 4 geht von dem Ausführungsbeispiel der Fig. 3 aus. Nachfolgend werden daher nur die Änderungen gegenüber dem Ausführungsbeispiel der Fig. 3 erläutert.

Wie schon bei dem dritten Ausführungsbeispiel ist für beide Hydromotorpaare ein gemeinsames erstes Schaltventil 18' vorgesehen. Das gemeinsame erste Schaltventil 18' trennt jedoch in seiner zweiten Schaltposition 20' alle vier Anschlüsse 23.1 - 23.4 voneinander.

Der erste Abschnitt 16 der ersten Umgehungsleitung 15 umfasst wiederum einen ersten Umgehungsleitungszweig 50' und einen zweiten Umgehungsleitungszweig 51'. Im Unterschied zu dem Ausführungsbeispiel der Fig. 3 ist jedoch der erste Umgehungsleitungszweig 50' mit dem ersten Anschluss 23.1 des ersten Schaltventils 18' verbunden. Damit verbindet der erste Umgehungsleitungszweig 50' den ersten Arbeitsleitungsabschnitt 12 mit dem ersten Schaltventil 18'.

Der zweite Umgehungsleitungszweig 51' verbindet dagegen den zweiten Arbeitsleitungsabschnitt 112 mit dem vierten Anschluss 23.4 des ersten Schaltventils 18'.

Ferner ist eine dritte Speiseventileinheit 41' vorgesehen. Die dritte Speiseventileinheit 41' ist in einem ersten Verbindungsleitungszweig 48a' angeordnet, der die Verbindungsleitung 48 direkt mit dem ersten Arbeitsleitungsabschnitt 12 verbindet. Weiterhin ist eine vierte Speiseventileinheit 141' vorgesehen, welche in einem zweiten Verbindungsleitungszweig 48b' angeordnet ist. Der zweite Verbindungsleitungszweig 48b' verbindet entsprechend die Verbindungsleitung 48 direkt mit dem zweiten Arbeitsleitungsabschnitt 112. In dem dargestellten vierten Ausführungsbeispiel mündet hierzu der zweite Verbindungsleitungszweig 48b' in den zweiten Umgehungsleitungszweig 51' aus.

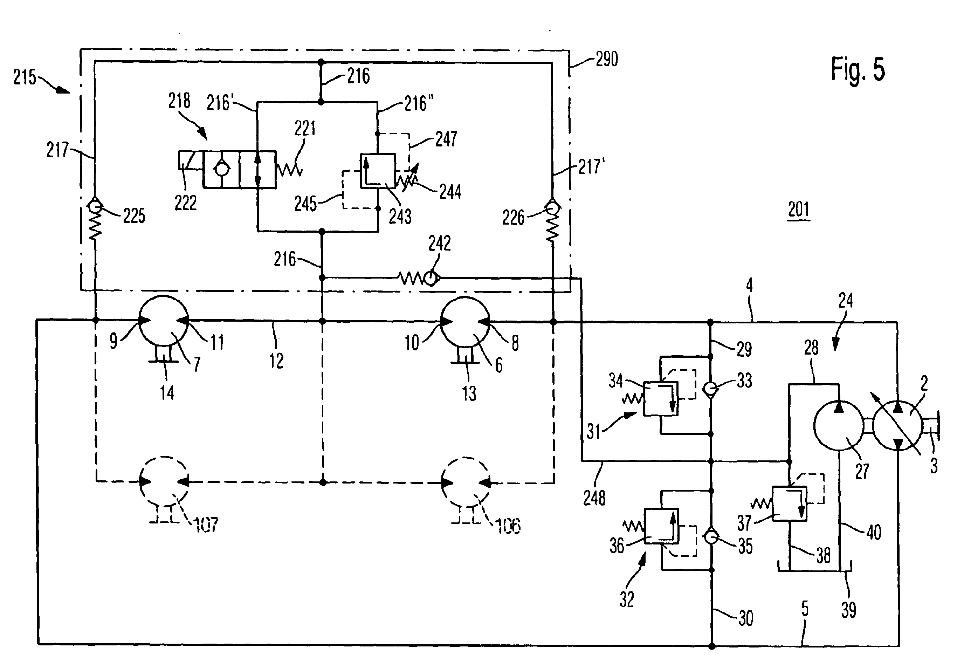

In der Figur 5 ist ein weiteres Ausführungsbeispiel eines erfindungsgemäßen Mehrmotorenantriebs gezeigt. Der dort gezeigte Mehrmotorenantrieb 201 basiert grundsätzlich auf dem in der Figur 1 dargestellten und ausführlich erläuterten. Allerdings sind hier die zum Aufrechterhalten eines Mindestdrucks an dem jeweils stromabwärtigen Motor erforderlichen Komponenten in einem Funktionsblock 290 zusammengefasst. Der Funktionsblock 290 umfasst eine geänderte Ausführung des ersten Schaltventils 218. Um die Funktionen leichter nachvollziehen zu können, sind jeweils sich entsprechende Merkmale mit um 200 erhöhten Bezugszeichen versehen.

Im Unterschied zu der Figur 1 werden der zweite Abschnitt 217 und der dritte Abschnitt 217' außerhalb des ersten Schaltventils 218 zusammengeführt. An diesem Zusammenführungspunkt zweigt der erste Abschnitt 216 ab, der so den zweiten und dritten Abschnitt 217, 217' mit dem ersten Arbeitsleitungsabschnitt 12 verbindet. Der erste Abschnitt 216 verzweigt sich dabei in einen ersten Leitungszweig 216' und einen zweiten Leitungszweig 216". In dem ersten Leitungszweig 216' ist das erste Schaltventil 218 angeordnet. Das erste Schaltventil 218 verbindet in seiner dargestellten Ausgangsposition, in der es durch die Ventilfeder 221 gehalten wird, den zweiten Abschnitt 217 und gleichzeitig den dritten Abschnitt 217' über den ersten Abschnitt 216 mit dem ersten Arbeitsleitungsabschnitt 12. Wird dagegen das erste Schaltventil 218 durch den Elektromagneten 222 in seine zweite Schaltposition gebracht, so ist ein Abströmen von Druckmittel aus dem ersten Arbeitsleitungsabschnitt durch eine Rückschlagventilfunktion in der zweiten Position des ersten Schaltventils 218 verhindert und so die Umgehungsleitung 215, welche auch den ersten Abschnitt 216 umfasst, unterbrochen.

In dem zweiten Leitungszweig 216" ist das Differenzdruckregelventil 243 angeordnet. Das Differenzdruckregelventil 243 stimmt in seinem Aufbau und der Funktion im Wesentlichen mit dem Differenzdruckregelventil 43 überein, welches bereits unter Bezugnahme auf Figur 1 erläutert wurde. Um unnötige Wiederholungen zu vermeiden, wird daher nachfolgend auf eine erneute Beschreibung verzichtet. Der erste Abschnitt 216 ist in seinem zwischen dem ersten Schaltventil 218 und dem Differenzdruckregelventil 243 und dem ersten Arbeitsleitungsabschnitt 12 ausgebildeten Teil über die Verbindungsleitung 248 mit der Speiseeinrichtung 24 verbunden. In der Verbindungsleitung 248 ist zudem nunmehr das Rückschlagventil 242 angeordnet, welches hier allein die dritte Speiseventileinheit bildet.

Durch die parallele Anordnung des geänderten ersten Schaltventils 218 mit dem Differenzdruckregelventil 243 ist es möglich, ein vereinfachtes erstes Schaltventil 218 einzusetzen. Die Ausführung des ersten Schaltventils 218 ist gegenüber dem 4/2-Wegeventil der Figur 1 vereinfacht. Diese Vereinfachung wird durch die parallele Anordnung des Differenzdruckregelventils 243 zur Druckabsicherung erreicht.

Der Funktionsblock 290 kann als Baugruppe in den erfindungsgemäßen hydrostatischen Mehrmotorenantrieb 201 integriert werden. Dadurch ist es insbesondere möglich, eine Erweiterung auf mehr als die zwei dargestellten Hydromotoren 6, 7 vorzunehmen. So ist es in der Figur 5 gestrichelt dargestellt, dass ein weiterer erster Hydromotor 106 und ein weiterer zweiter Hydromotor 107 parallel zum ersten Hydromotor 6 beziehungsweise dem zweiten Hydromotor 7 angeordnet sind. Der Funktionsblock 290 ist dabei mit beiden Hydromotorpaaren verbunden.

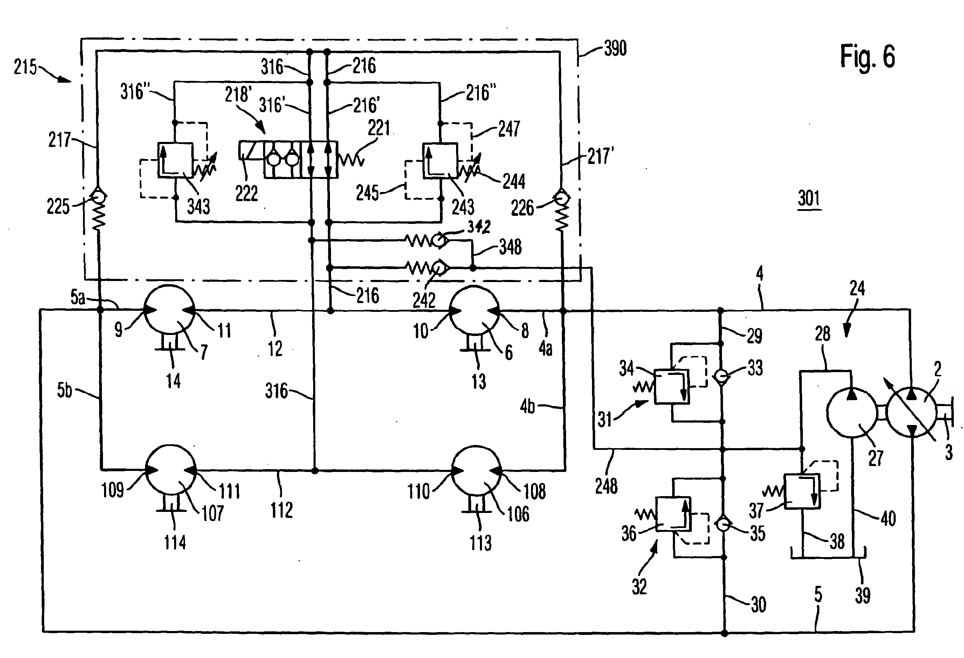

In der Figur 6 ist ein abgewandeltes Ausführungsbeispiel des Mehrmotorenantriebs der Figur 5 dargestellt. Hier sind ebenfalls insgesamt vier Hydromotoren 6, 7, 106 und 107 vorgesehen, wobei der erste Hydromotor 6 und der zweite Hydromotor 7 ein erstes Hydromotorpaar und der weitere erste Hydromotor 106 und der weitere zweite Hydromotor 107 ein zweites Hydromotorpaar bilden. Der abgewandelte Funktionsblock 390 verfügt über ein modifiziertes erstes Schaltventil 218' in dem zwei parallele Wege in der Ruheposition ausgebildet sind. Ein erster Weg verbindet dabei in der Ruheposition des modifizierten Schaltventils 218' den zweiten und dritten Abschnitt 217, 217' mit dem ersten Arbeitsleitungsabschnitt 12. Parallel hierzu ist in dem zweiten Leitungszweig 216', wie es bei der Figur 5 schon erläutert wurde, das Differenzdruckregelventil 243 vorgesehen. Die Anordnung in Bezug auf den ersten Hydromotor 6 und den zweiten Hydromotor 7 des ersten Hydromotorpaars entspricht daher vollständig der in der Figur 5 bereits gezeigten.

Durch den weiteren Weg durch das modifizierte Schaltventil 218' ist es jedoch möglich, den ersten Hydromotor 106 und den zweiten Hydromotor 107 des zweiten Hydromotorpaars über den zweiten Weg des modifizierten ersten Schaltventils 218 von dem ersten Hydromotor 6 und dem zweiten Hydromotor 7 zu entkoppeln. Demzufolge ist ein weiterer erster Abschnitt 316 vorgesehen, der über den zweiten Weg durch das modifizierte erste Schaltventil 218' den zweiten und dritten Abschnitt 217, 217' mit dem zweiten Arbeitsleitungsabschnitt 112 verbindet. Das modifizierte erste Schaltventil 218' ist daher in dem jeweils ersten Leitungszweig 216' beziehungsweise 316' des ersten Abschnitts 216 beziehungsweise des zweiten Abschnitts 316 angeordnet. Um auch in Bezug auf das zweite Hydromotorpaar 106, 107 eine Druckabsicherung zu ermöglichen, ist parallel zu dem zweiten Weg des modifizierten Schaltventils 218' ein weiteres Differenzdruckregelventil 343 in einem zweiten Leitungsabschnitt 316" des ersten Abschnitts 316 angeordnet. Hinsichtlich der Funktion entspricht das Differenzdruckregelventil 343 dem Differenzdruckregelventil 243.

In der zweiten Schaltposition des modifizierten ersten Schaltventils 218' sind für jeden der beiden Wege Rückschlagventilfunktionen ausgebildet. In dem Ausführungsbeispiel nach Fig. 6 umfasst die Umgebungsleitung die beiden parallelen ersten Abschnitte 216 und 316.

Zudem zweigt von der Verbindungsleitung 248 ein Verbindungsleitungszweig 348 ab, der in den zwischen dem modifizierten ersten Schaltventil 218' und dem zweiten Arbeitsleitungsabschnitt 112 ausgebildeten Teil des ersten Abschnitts 316 ausmündet. In dem Verbindungsleitungszweig 348 ist ein weiteres Speiseventil 342 angeordnet, welches wie das Speiseventil 242 in Richtung auf den ersten Abschnitt 316 öffnet.

Die Funktion der einzelnen Elemente entspricht im Übrigen den bereits unter Bezugnahme auf die Fig. 1 -Fig. 3 erläuterten. Die Erfindung ist ferner nicht auf die dargestellten Ausführungsbeispiele beschränkt.

## Patentansprüche

1. Hydrostatischer Mehrmotorenantrieb mit einer Hydropumpe (2) und zumindest einem ersten Hydromotorenpaar, wobei die beiden Hydromotoren (6, 7) des ersten Hydromotorpaars über einen ersten Arbeitsleitungsabschnitt (12) seriell miteinander verbunden sind und eine erste Umgehungsleitung (15, 215) vorgesehen ist, die einen stromaufwärtigen Anschluss (11, 10) des bezüglich eines von der Hydropumpe (3) erzeugten Volumenstroms stromabwärtigen Hydromotors (7, 6) mit einem stromabwärtigen Anschluss (9, 8) des stromabwärtigen Hydromotors (7, 6) verbindet, wobei in der Umgehungsleitung (15) eine die erste Umgehungsleitung (15, 215) unterbrechende erste Ventileinheit (18, 218, 218') angeordnet ist,
**dadurch gekennzeichnet,**
**dass** in der ersten Umgehungsleitung (15, 215) eine erste Mindestdruckhalteeinrichtung (25, 26) zum Aufrechterhalten eines Mindestdrucks an dem stromaufwärtigen Anschluss (11, 10) des stromabwärtigen Hydromotors (7, 6) angeordnet ist, wobei die Mindestdruckhalteeinrichtung (25, 26) eingerichtet ist, Druckmittel über die Umgehungsleitung (15) zu dem stromabwärtigen Anschluss (9, 8) des stromabwärtigen Hydromotors (7, 6) zuzuführen und den Mindestdruck an dem stromaufwärtigen Anschluss (11, 10) des stromabwärtigen Hydromotors (7, 6) aufrechtzuerhalten, der zum Erzeugen eines Antriebsmoments des stromabwärtigen Hydromotors (7, 6) führt,
wobei die erste Umgehungsleitung (15, 215) zumindest einen ersten Abschnitt (16, 216) umfasst, der den ersten Arbeitsleitungsabschnitt (12) mit der ersten Ventileinheit (18, 218, 218') verbindet, und einen zweiten Abschnitt (17, 217) umfasst, der die erste Ventileinheit (18) mit einer stromabwärtigen Arbeitsleitung (5) verbindet und einen dritten Abschnitt (17', 217') umfasst, der die erste Ventileinheit (18) mit einer stromaufwärtigen Arbeitsleitung (4) verbindet, und
wobei die erste Mindestdruckhalteinrichtung (25, 26) jeweils ein federbelastetes Rückschlagventil in dem zweiten Abschnitt (17, 217) und in dem dritten Abschnitt (17', 217') der ersten Umgehungsleitung (15) umfasst.

2. Hydrostatischer Mehrmotorenantrieb nach Anspruch 1,
**dadurch gekennzeichnet,**
**dass** die erste Mindestdruckhalteeinrichtung (25, 26) zumindest ein federbelastetes Rückschlagventil umfasst.

3. Hydrostatischer Mehrmotorenantrieb nach einem der Ansprüche 1 oder 2,
**dadurch gekennzeichnet,**
**dass** der hydrostatische Antrieb (60) ein zweites Hydromotorpaar aufweist, dessen zwei Hydromotoren (106, 107) über einen zweiten Arbeitsleitungsabschnitt (112) seriell miteinander verbunden sind, wobei dem stromabwärtigen Hydromotor (107, 106) des zweiten Hydromotorpaars eine zweite Umgehungsleitung (115) mit einer zweiten Ventileinheit (118) und zumindest einer zweiten Mindestdruckhalteeinrichtung (125, 126) zugeordnet ist.

4. Hydrostatischer Mehrmotorenantrieb nach Anspruch 3,
**dadurch gekennzeichnet,**
**dass** die erste und die zweite Umgehungsleitung (15, 115, 215) und/oder die erste und die zweite Mindesthaltedruckeinrichtung (25, 26; 125, 126) gleich aufgebaut sind.

5. Hydrostatischer Mehrmotorenantrieb nach Anspruch 1 oder 2,
**dadurch gekennzeichnet,**
**dass** der hydrostatische Mehrmotorenantrieb ein zweites Hydromotorpaar aufweist, dessen zwei Hydromotoren (106, 107) über einen zweiten Arbeitsleitungsabschnitt (112) seriell miteinander verbunden sind, wobei die erste Umgehungsleitung (15) die jeweils stromaufwärtigen Anschlüsse (11, 111; 10, 110) der stromabwärtigen Hydromotoren (7, 107; 6, 106) beider Hydromotorpaare mit den stromabwärtigen Anschlüssen (9, 109; 8, 108) der stromabwärtigen Hydromotoren (7, 107; 106) beider Hydromotorenpaare verbindet.

6. Hydrostatischer Mehrmotorenantrieb nach Anspruch 5,
**dadurch gekennzeichnet,**
**dass** die erste Umgehungsleitung (15) zumindest einen ersten Abschnitt (16') mit einem ersten Umgehungsleitungszweig (50, 50') umfasst, der den ersten Arbeitsleitungsabschnitt (12) mit der ersten Ventileinheit (18) verbindet, und einen zweiten Umgehungsleitungszweig (51, 51') umfasst, der den zweiten Arbeitsleitungsabschnitt (112) mit der ersten Ventileinheit (18) verbindet, und einen zweiten Abschnitt (17) umfasst, der die erste Ventileinheit (18) mit einer stromabwärtigen Arbeitsleitung (5) verbindet und einen dritten Abschnitt (17') umfasst, der die erste Ventileinheit (18) mit einer stromaufwärtigen Arbeitsleitung (4) verbindet.

7. Hydrostatischer Mehrmotorenantrieb nach Anspruch 6,
**dadurch gekennzeichnet,**
**dass** der erste Umgehungsleitungszweig (50) und der zweite Umgehungsleitungszweig (51) gemeinsam an einem Anschluss (23.1) der ersten Ventileinheit (18) ausmünden.

8. Hydrostatischer Mehrmotorenantrieb nach Anspruch 6,
**dadurch gekennzeichnet,**
**dass** der erste Umgehungsleitungszweig (50') und der zweite Umgehungsleitungszweig (51') an zwei unterschiedlichen Anschlüssen (23.1, 23.4) der ersten Ventileinheit (18') ausmünden und die unterschiedlichen Anschlüsse (23.1, 23.4) in einer Schaltposition der ersten Ventileinheit (18) voneinander getrennt sind.

9. Hydrostatischer Mehrmotorenantrieb nach einem der Ansprüche 6 bis 8,
**dadurch gekennzeichnet,**
**dass** der erste Arbeitsleitungsabschnitt (12) und der zweite Arbeitsleitungsabschnitt (112) über jeweils eine separate Speiseventileinheit (41, 141) mit der Speiseeinrichtung (24) verbunden sind.

10. Hydrostatischer Mehrmotorenantrieb nach einem der Ansprüche 6 bis 9,
**dadurch gekennzeichnet,**
**dass** die Mindestdruckhalteinrichtung (25, 26) jeweils ein federbelastetes Rückschlagventil in dem zweiten Abschnitt (17) und in dem dritten Abschnitt (17') der Umgehungsleitung (15) umfasst.

11. Hydrostatischer Mehrmotorenantrieb nach einem der Ansprüche 1 bis 10,
**dadurch gekennzeichnet,**
**dass** die erste und/oder zweite Ventileinheit (18, 118) als Schaltventil ausgeführt ist und in einer Schaltposition des Schaltventils der die beiden Hydromotoren (6, 7; 106, 107) miteinander verbindende Arbeitsleitungsabschnitt (12, 112)mit einer Speiseeinrichtung (24) verbunden ist.

12. Hydrostatischer Mehrmotorenantrieb nach einem der Ansprüche 1 bis 8,
**dadurch gekennzeichnet,**
**dass** eine Speiseventileinheit (41) über die Ventileinheit (18) mit dem ersten und/oder mit dem zweiten Arbeitsleitungsabschnitt (12, 112) verbunden ist.

## Claims

1. Hydrostatic multi-motor drive having a hydraulic pump (2) and at least one first pair of hydraulic motors, the two hydraulic motors (6, 7) of the first hydraulic motor pair being serially connected to one another via a first control line portion (12) and a first bypass line (15, 215) being provided which connects an upstream connector (11, 10) of the hydraulic motor (7, 6) that is downstream with respect to a volume flow produced by the hydraulic pump (3) to a downstream connector (9, 8) of the downstream hydraulic motor (7, 6), while a first valve unit (18, 218, 218') that interrupts the first bypass line (15, 215) is disposed in the bypass line (15), **characterised in that**
in the first bypass line (15, 215) is provided a first minimum pressure maintaining device (25, 26) for maintaining a minimum pressure at the upstream connector (11, 10) of the downstream hydraulic motor (7, 6), the minimum pressure maintaining device (25, 26) being arranged to supply pressure medium through the bypass line (15) to the downstream connector (9, 8) of the downstream hydraulic motor (7, 6) and to maintain the minimum pressure at the upstream connector (11, 10) of the downstream hydraulic motor (7, 6) which leads to the production of a drive moment of the downstream hydraulic motor (7, 6),
the first bypass line (15, 215) comprising at least one first portion (16, 216) which connects the first control line portion (12) to the first valve unit (18, 218, 218'), and a second portion (17, 217) which connects the first valve unit (18) to a downstream control line (5), and a third portion (17', 217') which connects the first valve unit (18) to an upstream control line (4), and
the first minimum pressure maintaining device (25, 26) comprising in each case a spring-loaded non-return valve in the second portion (17, 217) and in the third portion (17', 217') of the first bypass line (15).

2. Hydrostatic multi-motor drive according to claim 1,
**characterised in that**
the first minimum pressure maintaining device (25, 26) comprises at least one spring-loaded non-return valve.

3. Hydrostatic multi-motor drive according to one of claims 1 or 2,
**characterised In that**
the hydrostatic drive (60) comprises a second pair of hydraulic motors, the two hydraulic motors (106, 107) of which are serially connected to one another via a second control line portion (112), while a second bypass line (115) with a second valve unit (118) and at least one second minimum pressure maintaining device (125, 126) is associated with the downstream hydraulic motor (107, 106) of the second hydraulic motor pair.

4. Hydrostatic multi-motor drive according to claim 3,
**characterised In that**
the first and the second bypass line (15, 115, 215) and/or the first and the second minimum pressure maintaining device (25, 26; 125, 126) are of identical construction.

5. Hydrostatic multi-motor drive according to claim 1 or 2,
**characterised in that**
the hydrostatic multi-motor drive comprises a second hydraulic motor pair, the two hydraulic motors (106, 107) of which are serially connected to one another via a second control line portion (112), while the first bypass line (15) connects the upstream connectors (11, 111; 10, 110) of the downstream hydraulic motors (7, 107; 6, 106) of the two hydraulic motor pairs to the downstream connectors (9, 109; 8, 108) of the downstream hydraulic motors (7, 107; 106) of the two hydraulic motor pairs.

6. Hydrostatic multi-motor drive according to claim 5,
**characterised in that**
the first bypass line (15) comprises at least one first portion (16') with a first bypass line branch (50, 50') which connects the first control line portion (12) to the first valve unit (18), and comprises a second bypass line branch (51, 51') which connects the second control line portion (112) to the first valve unit (18), and comprises a second portion (17) which connects the first valve unit (18) to a downstream control line (5) and comprises a third portion (17') which connects the first valve unit (18) to an upstream control line (4).

7. Hydrostatic multi-motor drive according to claim 6,
**characterised in that**
the first bypass line branch (50) and the second bypass line branch (51) jointly open out at a connector (23.1) of the first valve unit (18).

8. Hydrostatic multi-motor drive according to claim 6,
**characterised in that**
the first bypass line branch (50') and the second bypass line branch (51') open out at two different connectors (23.1, 23.4) of the first valve unit (18') and the different connectors (23.1, 23.4) are separated from one another in one switching position of the first valve unit (18).

9. Hydrostatic multi-motor drive according to one of claims 6 to 8,
**characterised In that**
the first control line portion (12) and the second control line portion (112) are each connected to the feed device (24) via a separate feed valve unit (41, 141).

10. Hydrostatic multi-motor drive according to one of claims 6 to 9,
**characterised in that**
the minimum pressure maintaining device (25, 26) comprises in each case a spring-loaded non-return valve in the second portion (17) and in the third portion (17') of the bypass line (15).

11. Hydrostatic multi-motor drive according to one of claims 1 to 10,
**characterised in that**
the first and/or second valve unit (18, 118) is configured as a switching valve and in one switching position of the switching valve the control line portion (12, 112) that joins together the two hydraulic motors (6, 7; 106, 107) is connected to a feed device (24).

12. Hydrostatic multi-motor drive according to one of claims 1 to 8,
**characterised in that**
a feed valve unit (41) is connected via the valve unit (18) to the first and/or second control line portion (12, 112).

## Revendications

1. Entraînement hydrostatique à plusieurs moteurs comportant une pompe hydraulique (2) et au moins une première paire de moteurs hydrauliques, sachant que les deux moteurs hydrauliques (6, 7) de la première paire de moteurs hydrauliques sont reliés l'un à l'autre en série par l'intermédiaire d'un premier tronçon de conduite de travail (12) et qu'une première conduite de dérivation (15, 215) est prévue, laquelle relie un raccord situé en amont (11, 10) du moteur hydraulique (7, 6) situé en aval par rapport à un débit volumique généré par la pompe hydraulique (3) à un raccord situé en aval (9, 8) du moteur hydraulique (7, 6) situé en aval, sachant qu'une première unité de soupape (18, 218, 218') coupant la première conduite de dérivation (15, 215) est disposée dans la conduite de dérivation (15),
**caractérisé en ce**
**qu'**un premier dispositif de maintien d'une pression minimale (25, 26) servant à maintenir une pression minimale au niveau du raccord situé en amont (11, 10) du moteur hydraulique situé en aval (7, 6) est disposé dans la première conduite de dérivation (15, 215), sachant que le dispositif de maintien d'une pression minimale (25, 26) est installé pour amener un moyen de pression par l'intermédiaire de la conduite de dérivation (15) vers le raccord situé en aval (9, 8) du moteur hydraulique situé en aval (7, 6) et pour maintenir la pression au minimum sur le raccord situé en amont (11, 10) du moteur hydraulique situé en aval (7, 6), qui conduit à générer un couple d'entraînement du moteur hydraulique situé en aval (7, 6),
sachant que la première conduite de dérivation (15, 215) comporte au moins un premier tronçon (16, 216) qui relie le premier tronçon de conduite de travail (12) à la première unité de soupape (18, 218, 218'), ainsi qu'un deuxième tronçon (17, 217) qui relie la première unité de soupape (18) à une conduite de travail située en aval (5), et un troisième tronçon (17', 217') qui relie la première unité de soupape (18) à une conduite de travail située en amont (4), et
sachant que le premier dispositif de maintien d'une pression minimale (25, 26) comporte une soupape de retenue commandée par ressort respectivement dans le deuxième tronçon (17, 217) et dans le troisième tronçon (17', 217') de la première conduite de dérivation (15).

2. Entraînement hydrostatique à plusieurs moteurs selon la revendication 1,
**caractérisé en ce**
**que** le premier dispositif de maintien d'une pression minimale (25, 26) comporte au moins une soupape de retenue commandée par ressort.

3. Entraînement hydrostatique à plusieurs moteurs selon l'une quelconque des revendications 1 ou 2,
**caractérisé en ce**
**que** l'entraînement hydrostatique (60) présente une deuxième paire de moteurs hydrauliques, dont les deux moteurs hydrauliques (106, 107) sont reliés l'un à l'autre en série par l'intermédiaire d'un deuxième tronçon de conduite de travail (112), sachant qu'une deuxième conduite de dérivation (115) dotée d'une deuxième unité de soupape (118) et d'au moins un deuxième dispositif de maintien d'une pression minimale (125, 126) est associée au moteur hydraulique situé en aval (107, 106) de la deuxième paire de moteurs hydrauliques.

4. Entraînement hydrostatique à plusieurs moteurs selon la revendication 3,
**caractérisé en ce**
**que** la première conduite de dérivation et la deuxième conduite de dérivation (15, 115, 215) et/ou le premier et le deuxième dispositif de maintien d'une pression minimale (25, 26 ; 125, 126) présentent la même structure.

5. Entraînement hydrostatique à plusieurs moteurs selon la revendication 1 ou 2,
**caractérisé en ce**
**que** l'entraînement hydrostatique à plusieurs moteurs présente une deuxième paire de moteurs hydrauliques, dont les deux moteurs hydrauliques (106, 107) sont reliés l'un à l'autre en série par l'intermédiaire d'un deuxième tronçon de conduite de travail (112), sachant que la première conduite de dérivation (15) relie chacun des raccords situés en amont (11, 111 ; 10, 110) des moteurs hydrauliques situés en aval (7, 107 ; 6, 106) des deux paires de moteurs hydrauliques aux raccords situés en aval (9, 109 ; 8, 108) des moteurs hydrauliques situés en aval (7, 107 ; 106) des deux paires de moteurs hydrauliques.

6. Entraînement hydrostatique à plusieurs moteurs selon la revendication 5,
**caractérisé en ce**
**que** la première conduite de dérivation (15) comporte au moins un premier tronçon (16') doté d'une première branche de conduite de dérivation (50, 50'), qui relie le premier tronçon de conduite de travail (12) à la première unité de soupape (18), et comporte également une deuxième branche de conduite de dérivation (51, 51') qui relie le deuxième tronçon de conduite de travail (112) à la première unité de soupape (18), et un deuxième tronçon (17) qui relie la première unité de soupape (18) à une conduite de travail située en aval (5), et comporte un troisième tronçon (17') qui relie la première unité de soupape (18) à une conduite de travail (4) située en amont.

7. Entraînement hydrostatique à plusieurs moteurs selon la revendication 6,
**caractérisé en ce**
**que** la première branche de conduite de dérivation (50) et la deuxième branche de conduite de dérivation (51) débouchent conjointement au niveau d'un raccord (23.1) de la première unité de soupape (18).

8. Entraînement hydrostatique à plusieurs moteurs selon la revendication 6,
**caractérisé en ce**
**que** la première branche de conduite de dérivation (50') et la deuxième branche de conduite de dérivation (51') débouchent au niveau de deux raccords différents (23.1, 23.4) de la première unité de soupape (18'), et en ce que les raccords différents (23.1, 23.4) sont séparés l'un de l'autre dans une position de commutation de la première unité de soupape (18).

9. Entraînement hydrostatique à plusieurs moteurs selon l'une quelconque des revendications 6 à 8,
**caractérisé en ce**
**que** le premier tronçon de conduite de travail (12) et le deuxième tronçon de conduite de travail (112) sont reliés par l'intermédiaire respectivement d'une unité de soupape d'alimentation (41, 141) séparée au dispositif d'alimentation (24).

10. Entraînement hydrostatique à plusieurs moteurs selon l'une quelconque des revendications 6 à 9,
**caractérisé en ce**
**que** le dispositif de maintien d'une pression minimale (25, 26) comporte une soupape de retenue commandée par ressort respectivement dans le deuxième tronçon (17) et dans le troisième tronçon (17') de la conduite de dérivation (15).

11. Entraînement hydrostatique à plusieurs moteurs selon l'une quelconque des revendications 1 à 10,
**caractérisé en ce**
**que** la première unité de soupape et/ou la deuxième unité de soupape (18, 118) sont réalisées comme des soupapes de commutation, et en ce que le tronçon de conduite de travail (12, 112) reliant entre eux les deux moteurs hydrauliques (6, 7 ; 106, 107) est relié à un dispositif d'alimentation (24) dans une position de commutation de la soupape de commutation.

12. Entraînement hydrostatique à plusieurs moteurs selon l'une quelconque des revendications 1 à 8,
**caractérisé en ce**
**qu'**une unité de soupape d'alimentation (41) est reliée par l'intermédiaire de l'unité de soupape (18) au premier tronçon de conduite de travail et/ou au deuxième tronçon de conduite de travail (12, 112).
